(19) Europäisches Patentamt

European Patent Office

Office européen des brevets

(11) Veröffentlichungsnummer: **0 422 337 B1**

# (12) EUROPÄISCHE PATENTSCHRIFT

(45) Veröffentlichungstag der Patentschrift: **16.03.94**

(51) Int. Cl.5: **B01D 47/04**

(21) Anmeldenummer: **90111586.5**

(22) Anmeldetag: **19.06.90**

(54) **Verfahren und Vorrichtung zur Nassreinigung von Gasen, insbesondere von Rauchgasen.**

(30) Priorität: **21.06.89 DE 3920321**

(43) Veröffentlichungstag der Anmeldung:
**17.04.91 Patentblatt 91/16**

(45) Bekanntmachung des Hinweises auf die Patenterteilung:
**16.03.94 Patentblatt 94/11**

(84) Benannte Vertragsstaaten:
**AT**

(56) Entgegenhaltungen:
EP-A- 0 211 240
GB-A- 850 944
US-A- 4 472 324

**PATENT ABSTRACTS OF JAPAN vol. 4, no. 166 (C-31)(648) 18 November 1980, & JP-A-55 109430**

(73) Patentinhaber: **Berthold, Hermann**
**Zur Weide 1**
**A-9581 Ledenitzen(AT)**

(72) Erfinder: **Berthold, Hermann**
**Zur Weide 1**
**A-9581 Ledenitzen(AT)**

(74) Vertreter: **Vogeser, Werner, Dipl.-Ing. et al**
**Patent- und Rechtsanwälte,**
**Hansmann Vogeser Dr. Boecker Alber Dr. Strych,**
**Albert-Rosshaupter-Strasse 65**
**D-81369 München (DE)**

**Beschreibung**

Die Erfindung betrifft ein Verfahren entsprechend dem Oberbegriff des Anspruchs 1 sowie eine Vorrichtung entsprechend dem Oberbegriff des Anspruchs 7.

Ein Verfahren und eine Vorrichtung dieser Art sind aus der europäischen Patentanmeldung 86 109 070.2 bekannt. Bei diesen wird das zu reinigende Gas unter Druck in eine schaumbildende Reinigungsflüssigkeit geleitet. Durch eine Turbulenzeinrichtung in Form eines Ringes mit mehrfach gerippter Unterseite oder in Form von senkrechten, gewellten Blechen erfolgt die Bildung von Schaum, dessen Bläßchen die zu entfernenden Partikel des zu reinigenden Gases binden. Der Nachteil dieses Verfahrens und der entsprechenden Vorrichtung liegt darin, daß das zu reinigende Gas unter die Oberfläche der Reinigungsflüssigkeit gedrückt werden muß, damit eine intensive Kontaktierung mit der Reinigungsflüssigkeit und die Bildung von Schaum erreicht werden können. Von Nachteil ist auch, daß sich durch diese Arbeitsweise wegen des sowohl zeitlich als auch flächenmäßig begrenzten Kontakts des Gases mit der Reinigungsflüssigkeit nur eine begrenzte Schaumbildung erreichen läßt.

Der Erfindung liegt daher die Aufgabe zugrunde, das Verfahren und die Vorrichtung der eingangs genannten Art hinsichtlich des erforderlichen Energieaufwandes und der Schaumbildung zu verbessern.

Gelöst wird diese Aufgabe gemäß der Erfindung durch die im kennzeichnenden Teil der Ansprüche 1 und 7 angegebenen Merkmale.

Bei der vorgeschlagenen Art der Reinigung wird ein intensiver Kontakt des zu reinigenden Gases mit der Reinigungsflüssigkeit dadurch erreicht, daß aufgrund der sich ändernden Durchtrittsquerschnitte im Reaktionsraum eine pulsierende Strömung entsteht, so daß eine Turbulenzbildung erfolgt, die noch durch die mit der Reinigungsflüssigkeit benetzte, sich bewegende unregelmäßige Oberfläche der Begrenzungswand des Reaktionsraums begünstigt wird. Hierdurch ergibt sich eine besonders hohe Filterwirkung, da die entstehenden Bläßchen eine große Filterfläche bilden. Es erfolgt dabei nicht nur eine Bildung von einzelnen Bläßchen, vielmehr können diese wiederum mehrere kleinere Bläßchen in sich einschließen.

Die Oberfläche der Begrenzungswand hat zweckmäßigerweise Öffnungen, so daß sich ein weiterer Reaktionsraum bildet. In diesem Sekundärreaktionsraum herrschen ähnliche Verhältnisse wie im Primärreaktionsraum.

Eine zweckmäßig ausgestaltete Vorrichtung zur Durchführung des Reinigungsverfahrens hat zwei den Primärreaktionsraum in Strömungsrichtung seitlich begrenzende leerlaufende Walzen, die durch den Gasstrom gegensinnig angetrieben werden. Die unregelmäßige Oberfläche dieser Walzen wird durch schaufelartige, nach innen ragende Vorsprünge gebildet, die aus der Walzenoberfläche nach innen gedrückt sind, so daß dadurch gleichzeitig Öffnungen entstehen, durch die ein Sekundärreaktionsraum gebildet wird. Der Sekundärreaktionsraum wird in Strömungsrichtung seitlich durch je ein stehendes Umlenkrohr begrenzt, das achsparallel in der entsprechenden leerlaufenden Walze angeordnet ist. An jedem Umlenkrohr ist eine Druckausgleichsklappe angeordnet, die auf der Oberfläche der Reinigungsflüssigkeit aufliegen kann. Die Oberfläche der Reinigungsflüssigkeit begrenzt den Gasstrom in Strömungsrichtung, so daß Teile des Primär- und Sekundärgasstroms von der Reinigungsflüssigkeit aufgenommen werden. Ein weiterer Teil dieser Strömungen gelangt über die Druckausgleichsklappe und die Öffnungen der Walzen in eine die Walzen umgebende Reinigungskammer. Aus der Reinigungskammer kann der gebildete Schaum abgeleitet und zerlegt werden. Die dabei entstehende Flüssigkeit wird in einen Reinigungsflüssigkeits-Sammelbehälter zurückgeleitet, und das gereinigte Gas tritt aus. Der sich im Reinigungsflüssigkeits-Sammelbehälter bildende Schlamm wird abgeleitet und kann mittels des ungereinigten Gases getrocknet werden, falls dieses Gas eine ausreichend hohe Temperatur hat. Ein Teil dieses Schlammes kann aber auch zur weiteren Reinigung in den Primär- und Bekundärreaktionsraum zurückgeleitet werden.

Die Erfindung wird nachstehend anhand der Fig. 1 bis 4 beispielsweise erläutert. Es zeigt:

Fig. 1     eine schematische Darstellung einer Gasreinigungsvorrichtung,

Fig. 2     eine schematische Darstellung der Reinigungskammer und des darin befindlichen Primär- und Sekundärreaktionsraumes,

Fig. 3     eine Seitenansicht und

Fig. 4     eine Aufsicht, aus der die Lagerung und das Gehäuse der Walzen in Fig. 2 hervorgehen.

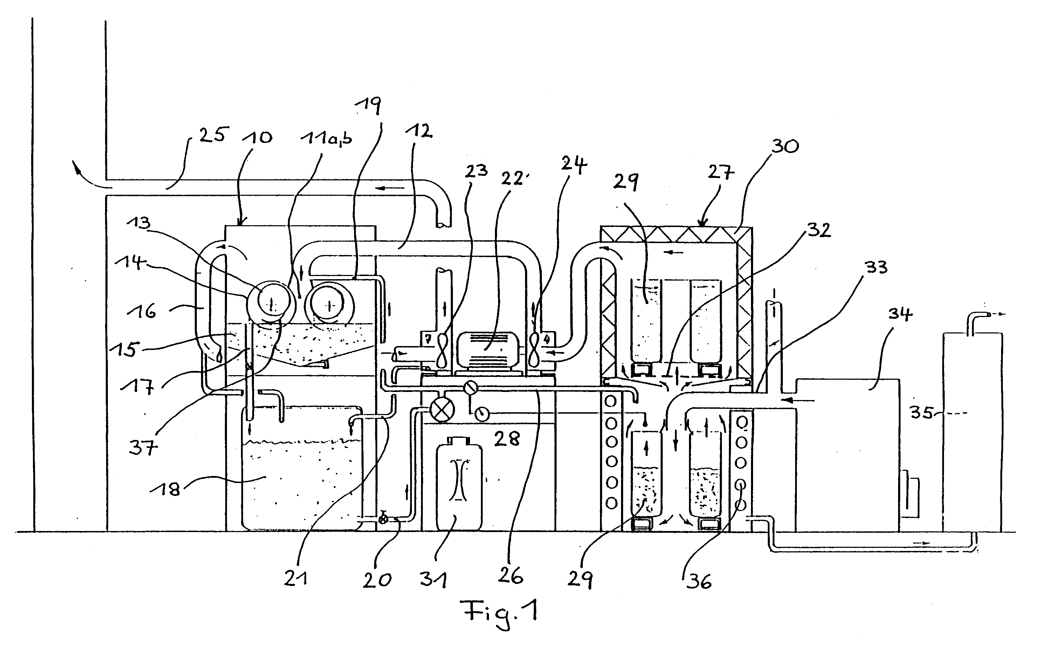

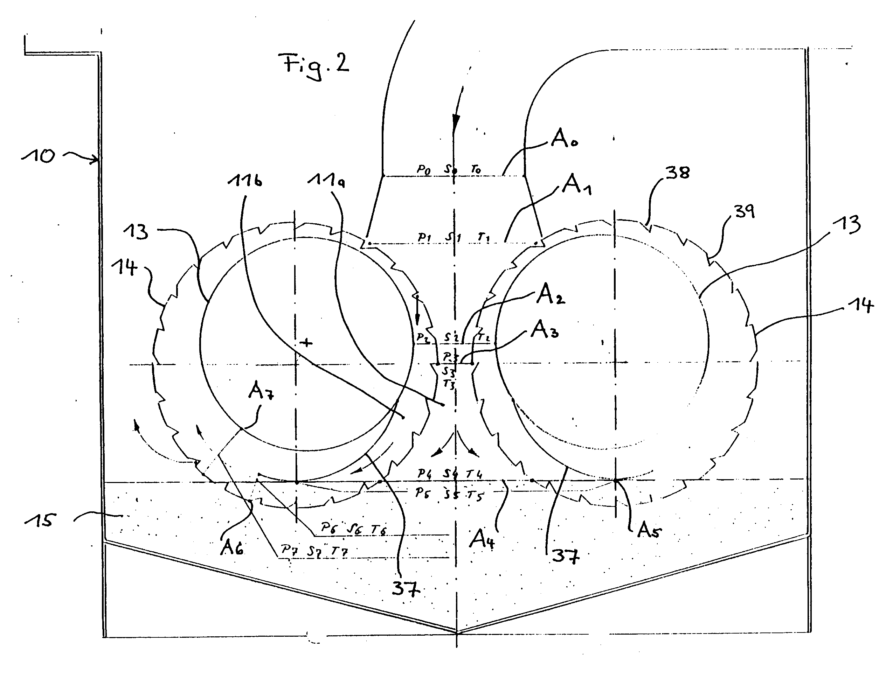

Die in Fig. 1 gezeigte Gasreinigungsvorrichtung hat eine Reinigungskammer 10, die im einzelnen in Fig. 2 gezeigt ist. Der Reinigungskammer 10 wird über ein Gaseintrittsrohr 12 ein zu reinigendes Gas zugeführt. Dieses Gas gelangt in einen Primärreaktionsraum 11a und einen Sekundärreaktionsraum 11b. Beide Räume sind in Strömungsrichtung seitlich von leerlaufenden Walzen 14 begrenzt, die durch das zugeführte Gas gegensinnig angetrieben werden. Die Reinigungskammer 10 hat unten ein Reinigungsflüssigkeitsbecken 15 mit einer schaumbildenden Reinigungsflüssigkeit. Der Schaum, dessen Bildung später im einzelnen beschrieben wird, wird über ein Schaumableitungsrohr 16 zu einem Schaumzerleger 23 geleitet, der z.B.

EP 0 422 337 B1

aus einem Radialgebläse bestehen kann, das von einem Motor 22 angetrieben wird. Die durch die Schaumzerlegung gebildete Flüssigkeit wird in einen Reinigungsflüssigkeits-Sammelbehälter 18 geleitet, während das gereinigte Gas über ein Austrittsrohr 25 abgeleitet wird. In den Sammelbehälter 18 wird auch Reinigungsflüssigkeit über ein Überlaufrohr 17 aus dem Becken 15 geleitet. Der sich im Sammelbehälter 18 absetzende Schlamm wird über ein Austrittsrohr 20 und ein weiteres Austrittsrohr 26 ganz oder teilweise in einen Schlammsammelbehälter 29 geleitet. Wie gezeigt ist, kann ein Teil des Schlamms über ein Vorlaufrohr 19 wieder in das Gaseintrittsrohr 12 zurückgeleitet werden.

Der Antriebsmotor 22 treibt auch ein Gebläserad 24 an, das das zu reinigende Gas aus einer Wärmetauscherbaugruppe 27 ansaugt. Die Wärmetauscherbaugruppe 27 hat ein Gehäuse 30, in dem unten ein ringförmiger Schlammsammelbehälter 29 steht. Darüber befindet sich auf einem Rost 32 ein weiterer Schlammsammelbehälter. Die beiden Behälter 29 werden durch das von einem Heizkessel 34 kommende und in das Gehäuse 30 eintretende, zu reinigende Gas aufgeheizt, um den Schlamm zu trocknen. Das Gehäuse 30 kann zusätzlich Kühlrohre 36 aufweisen, um einen Warmwasserboiler 35 zu versorgen.

Ein Ersatztank 31, der sich in einer den Schaumzerleger 23, den Motor 22, das Gebläse 24 sowie verschiedene, nicht näher beschriebene Ventile und Meßeinrichtungen aufweisenden Pumpen- und Regelbaugruppe 28 befindet, enthält Reinigungsflüssigkeit, die dem Reinigungsprozeß zugeführt wird, wenn die Reinigungsflüssigkeit verbraucht ist.

Wie Fig. 2 zeigt, gelangt das zu reinigende Gas über das Eintrittsrohr 12 in den Primär- und den Sekundärreaktionsraum 11a bzw. 11b. Die in den Reaktionsräumen und dem sich daran anschließenden Bereich herrschenden Druck-, Strömungsgeschwindigkeits- und Temperaturzustände sind in der nachstehenden Tabelle aufgeführt:

$$P_0 = konstant \qquad S_0 = zunehmend \qquad T_0 = abnehmend$$

$$P_1 > P_0 \qquad S_1 < S_0 \qquad T_1 < T_0$$

$$P_2 < P_1 \qquad S_2 > S_1 \qquad T_2 < T_1$$

$$P_3 < P_2 \qquad S_3 > S_2 \qquad T_3 < T_2$$

$$P_4 > P_3 \text{ u. } P_2 \qquad S_4 < S_3 \text{ u. } S_2 \qquad T_4 < T_3 \text{ u. } T_2$$

$$P_5 > P_2 \qquad S_5 < S_2 \qquad T_5 < T_4$$

$$P_6 < P_5 \qquad S_6 > S_5 \qquad T_6 < T_5$$

$$P_7 > P_6 \qquad S_7 < S_6 \qquad T_7 < T_6$$

3

Durchtrittsquerschnitte

$$A_0 < A_1$$

$$A_1 > A_0$$

$$A_2 < A_1$$

$$A_3 < A_2$$

$$A_4 > A_3, A_2$$

$$A_5 > A_4$$

$$A_6 < A_5$$

$$A_7 > A_6$$

Der Primärreaktionsraum wird bei dem vorliegenden Beispiel in Strömungsrichtung seitlich durch die beiden Walzen 14 begrenzt, die von dem Gasstrom gegensinnig angetrieben werden. Die Walzen haben nach innen ragende schaufelartige Vorsprünge 39, durch die Öffnungen 38 entstehen. Über diese Öffnungen kann der Gasstrom in das Innere der Walzen gelangen, wodurch der Sekundärreaktionsraum 11b gebildet wird. Der Reaktionsraum 11b ist in Strömungsrichtung seitlich durch Umlenkrohre 13 begrenzt, die achsparallel zu den Walzen 14 in diesen angeordnet sind. Jedes Umlenkrohr 13 hat eine schwenkbar angelenkte Druckausgleichsklappe 37, die nach unten ragt und zusammen mit der sich im Becken 15 befindenden Reinigungsflüssigkeit den Primär- und den Sekundärreaktionsraum 11a und 11b abdichtet. Im Betrieb wird die Klappe durch den Druck des Gases und des gebildeten Schaums über die Oberfläche der Reinigungsflüssigkeit entsprechend angehoben.

Die beiden Walzen 14 tauchen in die Reinigungsflüssigkeit, so daß deren Oberfläche sowohl außen als auch innen stets mit Reinigungsflüssigkeit benetzt ist. Auch auf den Umlenkrohren 13 befindet sich Reinigungsflüssigkeit. Durch diese Art der Zufuhr von Reinigungsflüssigkeit in die Reaktionsräume ergibt sich eine besonders intensive Kontaktierung zwischen dem zu reinigenden Gas und der Reinigungsflüssigkeit und eine hohe Turbulenzbildung, wodurch die Schaumbildung begünstigt wird. Durch den Schaum gebundene Partikel gelangen nicht nur in die Reinigungskammer 10, von woraus sie dem Schaumzerleger zugeführt werden, sondern auch unmittelbar in die Reinigungsflüssigkeit im Becken 15 und von da in den Sammelbehälter 18.

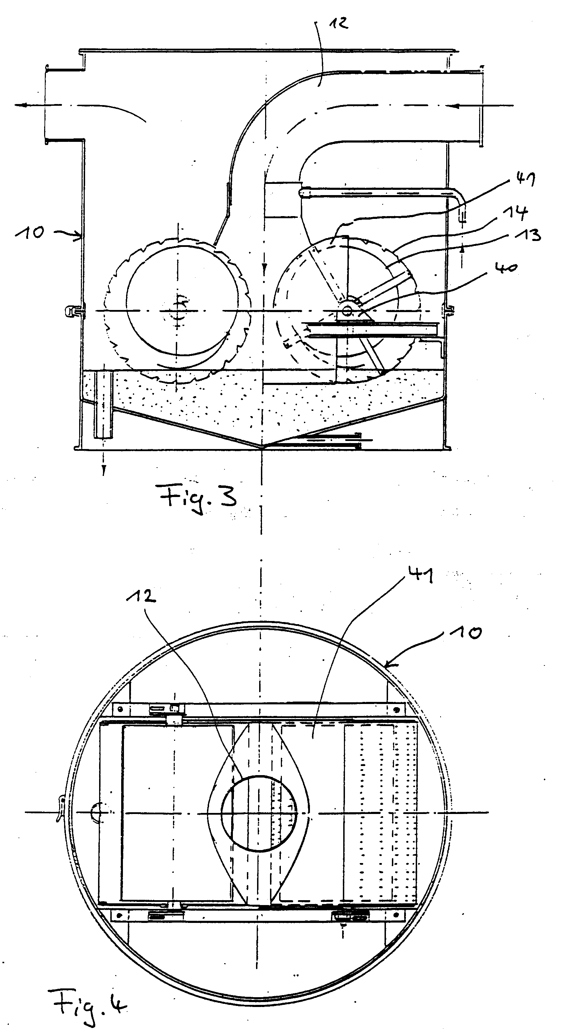

Die Fig. 3 und 4 zeigen, daß die Walzen 14, die in einem Gestell 40 gelagert sind, teilweise von einer Haube 41 umgeben sind, die den Primär-und den Sekundärreaktionsraum 11a und 11b umschließt.

**Patentansprüche**

1. Verfahren zur Naßreinigung von Gasen, insbesondere von Rauchgasen, bei denen ein Gas durch Turbulenzbildung mit einer schaumbildenden Reinigungsflüssigkeit in Kontakt gebracht wird,
**dadurch gekennzeichnet, daß**
das Gas in einen Primär-Reaktionsraum geleitet wird der in Strömungsrichtung sich ändernde Durchtrittsquerschnitte aufweist und in Strömungsrichtung seitlich durch wenigstens eine leerlaufende Walze begrenzt wird, die eine unregelmäßige und durch Eintauchen in die Reinigungsflüssigkeit eine von dieser benetzte Oberfläche aufweist, und daß der Primär-Raktionsraum in Strömungsrichtung vom Flüssigkeitsspiegel der Reinigungsflüssigkeit begrenzt wird.

4

2.  Verfahren nach Anspruch 1,
    **dadurch gekennzeichnet, daß**
    die Wandung Öffnungen aufweist, durch die das Gas strömt und dadurch auf der den Primär-Reaktionsraum abgewandten Seite der Wandung ein Sekundär-Reaktionsraum gebildet wird.

3.  Verfahren nach Anspruch 2,
    **dadurch gekennzeichnet, daß**
    der Flüssigkeitsspiegel der Reinigungsflüssigkeit auch eine den Sekundär-Reaktionsraum begrenzende Wandung bildet.

4.  Verfahren nach einem der Ansprüche 1 bis 3,
    **dadurch gekennzeichnet, daß**
    der durch Kontaktierung mit der Reinigungsflüssigkeit gebildete Schaum zerlegt, die sich ergebende Flüssigkeit gesammelt und das gereinigte Gas abgeleitet wird.

5.  Verfahren nach Anspruch 4,
    **dadurch gekennzeichnet, daß**
    ein Teil der gesammelten Flüssigkeit in den Primär-Reaktionsraum zurückgeleitet wird.

6.  Verfahren nach Anspruch 4 oder 5,
    **dadurch gekennzeichnet, daß**
    ein weiterer Teil der gesammelten Flüssigkeit durch das ungereinigte Gas getrocknet wird.

7.  Vorrichtung zur Durchführung des Verfahrens nach einem der Ansprüche 1 bis 6, bestehend aus einer Reinigungskammer (10) mit einem Gaseintrittsrohr (12) und einem Schaumaustrittsrohr (16), einer Turbulenzeinrichtung zur Kontaktierung des Gases mit der Reinigungsflüssigkeit und einem Reinigungsflüssigkeitsbecken (18),
    **gekennzeichnet durch**
    einen Primär-Reaktionsraum (11a), dem das Gas zugeführt wird, der sich in Strömungsrichtung ändernde Durchtrittsquerschnitte aufweist und der in Strömungsrichtung seitlich von wenigstens einer leerlaufenden Walze (14) begrenzt wird, die eine unregelmäßige Oberfläche aufweist und die in die Reinigungsflüssigkeit eintaucht, deren Oberfläche den Primär-Reaktionsraum (11a) in Strömungsrichtung begrenzt.

8.  Vorrichtung nach Anspruch 7,
    **dadurch gekennzeichnet, daß**
    die Oberfläche der Walze (14) Gasdurchtrittsöffnungen (38) aufweist, durch die auf der dem Primär-Reaktionsraum (11a) abgewandten Seite ein Sekundär-Reaktionsraum (11b) gebildet wird.

9.  Vorrichtung nach Anspruch 8,
    **dadurch gekennzeichnet, daß**
    die Öffnungen (38) durch nach innen ragende schaufelartige Vorsprünge (39) gebildet sind.

10. Vorrichtung nach Anspruch 8,
    **dadurch gekennzeichnet, daß**
    die Vorsprünge (39) rechteckig sind.

11. Vorrichtung nach einem der Ansprüche 8 bis 10,
    **dadurch gekennzeichnet, daß**
    der Sekundär-Reaktionsraum (11b) in Strömungsrichtung seitlich durch ein stehendes Umlenkrohr (13) begrenzt wird, das achsparallel in der Walze (14) angeordnet ist.

12. Vorrichtung nach Anspruch 11,
    **dadurch gekennzeichnet, daß**
    der Sekundär-Reaktionsraum (11b) zusätzlich in Strömungsrichtung seitlich durch eine an dem Umlenkrohr (13) angelenkte, im Ruhezustand den Primär- und den Sekundär-Reaktionsraum (11a, 11b) abdichtende Druckausgleichsklappe (37) begrenzt ist.

**13.** Vorrichtung nach einem der Ansprüche 7 bis 12,
**gekennzeichnet durch**
zwei einander gegenüberliegende, den Primär-Reaktionsraum (11a) seitlich begrenzende leerlaufende Walzen (14).

**14.** Vorrichtung nach Anspruch 13,
**dadurch gekennzeichnet, daß**
in jeder Walze (14) ein Umlenkrohr (13) mit einer Druckausgleichsklappe (37) angeordnet ist.

**15.** Vorrichtung nach einem der Ansprüche 7 bis 14,
**gekennzeichnet durch**
ein Überlaufrohr (17), das vom Reinigungsflüssigkeitsbecken (15) in einen Reinigungsflüssigkeits-Sammelbehälter (18) mündet.

**16.** Vorrichtung nach Anspruch 15,
**gekennzeichnet durch**
ein an den Sammelbehälter (18) angeschlossenes Austrittsrohr (20).

**17.** Vorrichtung nach Anspruch 16,
**dadurch gekennzeichnet, daß**
das Austrittsrohr (20) zu einem Schlammsammelbehälter (29) führt.

**18.** Vorrichtung nach Anspruch 16 oder 17,
**dadurch gekennzeichnet, daß**
das Austrittsrohr (20) über ein Vorlaufrohr (19) in das Gaseintrittsrohr (12) führt.

**19.** Vorrichtung nach einem der Ansprüche 1 bis 18,
**dadurch gekennzeichnet, daß**
der über das Schaumableitungsrohr (16) geführte Schaum mittels eines Schaumzerlegers (23) zerlegt wird.

**20.** Vorrichtung nach Anspruch 19,
**dadurch gekennzeichnet, daß**
die bei der Schaumzerlegung entstehende Flüssigkeit über ein Rücklaufrohr (21) in den Reinigungsflüssigkeits-Sammelbehälter (18) zurückgeführt wird.

**21.** Vorrichtung nach Anspruch 19,
**dadurch gekennzeichnet, daß**
der Schaumzerleger (23) von einem Motor (22) angetrieben wird, der gleichzeitig ein Sauggebläse (24) für das ungereinigte Gas antreibt.

**22.** Vorrichtung nach Anspruch 17,
**dadurch gekennzeichnet, daß**
der Schlammsammelbehälter (29) in einem Wärmetauscher angeordnet ist, dem das ungereinigte Gas zugeführt wird.

**Claims**

**1.** Process for the wet purification of gases, especially of flue gases, in which a gas is brought into contact with a foam-forming purification liquid by turbulence formation, characterised in that the gas is passed into a primary reaction chamber which has varying cross-sectional areas in the flow direction and is bounded laterally in the flow direction by at least one idling roller which has an irregular surface wetted by the purification liquid as a result of dipping in the latter, and in that the primary reaction chamber is bounded in the flow direction by the liquid level of the purification liquid.

**2.** Process according to Claim 1, characterised in that the wall has openings through which the gas flows and a secondary reaction chamber is thereby formed on that side of the wall remote from the primary reaction chamber.

6

3. Process according to Claim 2, characterised in that the liquid level of the purification liquid also forms a wall which bounds the secondary reaction chamber.

4. Process according to one of Claims 1 to 3, characterised in that the foam formed by contact with the purification liquid decomposes, the resultant liquid is collected and the purified gas is removed.

5. Process according to Claim 4, characterised in that some of the liquid collected is fed back into the primary reaction chamber.

6. Process according to Claim 4 or 5, characterised in that a further portion of the liquid collected is dried by the unpurified gas.

7. Device for carrying out the process according to one of Claims 1 to 6, comprising a purification chamber (10) having a gas inlet pipe (12) and a foam outlet pipe (16), a turbulence device for bringing the gas into contact with the purification liquid and a purification liquid tank (18), characterised by a primary reaction chamber (11a) to which the gas is fed, which has varying cross-sectional areas in the flow direction and which is bounded laterally in the flow direction by at least one idling roller (14) which has an irregular surface and which dips into the purification liquid, whose surface bounds the primary reaction chamber (11a) in the flow direction.

8. Device according to Claim 7, characterised in that the surface of the roller (14) has gas passage openings (38) which form a secondary reaction chamber (11b) on the side which is remote from the primary reaction chamber (11a).

9. Device according to Claim 8, characterised in that the openings (38) are formed by inwardly projecting blade-type protrusions (39).

10. Device according to Claim 8, characterised in that the protrusions (39) are rectangular.

11. Device according to one of Claims 8 to 10, characterised in that the secondary reaction chamber (11b) is bounded laterally in the flow direction by a fixed deflection pipe (13) which is disposed in an axially parallel manner in the roller (14).

12. Device according to Claim 11, characterised in that the secondary reaction chamber (11b) is additionally bounded laterally in the flow direction by a pressure equalisation valve (37) which is linked to the deflection pipe (13) and seals the primary and the secondary reaction chamber (11a, 11b) in the state of rest.

13. Device according to one of Claims 7 to 12, characterised by two idling rollers which are situated opposite one another and laterally bound the primary reaction chamber (11a).

14. Device according to Claim 13, characterised in that a deflection pipe (13) having a pressure equalisation valve (37) is disposed in each roller (14).

15. Device according to one of Claims 7 to 14, characterised by an overflow pipe (17) which discharges from the purification liquid tank (15) into a purification liquid collecting container (18).

16. Device according to Claim 15, characterised by an outlet pipe (20) connected to the collecting container (18).

17. Device according to Claim 16, characterised in that the outlet pipe (20) leads to a sludge collecting container (29).

18. Device according to Claim 16 or 17, characterised in that the outlet pipe (20) leads via a feed pipe (19) into the gas inlet pipe (12).

19. Device according to one of Claims 1 to 18, characterised in that the foam fed via the foam removal pipe (16) is decomposed by means of a foam breaker (23).

**20.** Device according to Claim 19, characterised in that the liquid produced during the foam breaking is fed back via a return pipe (21) into the purification liquid collecting container (18).

**21.** Device according to Claim 19, characterised in that the foam breaker (23) is driven by a motor (22) which simultaneously drives a suction fan (24) for the unpurified gas.

**22.** Device according to Claim 17, characterised in that the sludge collecting container (29) is disposed in a heat exchanger to which the unpurified gas is fed.

**Revendications**

**1.** Procédé d'épuration par voie humide de gaz, en particulier de gaz de fumées, pour lesquels un gaz est mis en contact avec un liquide d'épuration moussant par formation de turbulence, caractérisé en ce que le gaz est dirigé dans une enceinte de réaction primaire, présentant des sections de passage évoluent dans la direction de l'écoulement et limitée latéralement, dans la direction de l'écoulement, par au moins un rouleau tournant à vide présentant une surface irrégulière et mouillée par le liquide d'épuration, par immersion dans celui-ci et en ce que l'enceinte de réaction primaire et limitée, dans la direction de l'écoulement, par le niveau du liquide d'épuration..

**2.** Procédé selon la revendication 1, caractérisé en ce que la paroi présente des ouvertures, à travers lesquelles le gaz s'écoule et une enceinte de réaction secondaire est formée de ce fait, du côté opposé à l'enceinte de réaction primaire.

**3.** Procédé selon la revendication 1, caractérisé en ce que le niveau du liquide d'épuration forme également une paroi délimitant l'enceinte de réaction secondaire.

**4.** Procédé selon l'une des revendications 1 à 3, caractérisé en ce que la mousse formée par la mise en contact avec le liquide d'épuration est décomposée, le liquide résultant est collecté et le gaz épuré est évacué.

**5.** Procédé selon la revendication 4, caractérisé en ce qu'une partie du liquide collecté est recyclée dans l'enceinte de réaction.

**6.** Procédé selon la revendication 4 ou 5, caractérisé en ce qu'une autre partie du liquide collecté est séchée par le gaz non épuré.

**7.** Dispositif pour mettre en oeuvre le procédé selon l'une des revendications 1 à 6, composé d'une chambre d'épuration (10), avec un tube d'entrée de gaz (12) et un tube de sortie de gaz (16), un dispositif de production de turbulence, pour opérer la mise en contact du gaz avec le liquide d'épuration et une cuve de liquide d'épuration (18), caractérisé par une enceinte de réaction primaire (11a), à laquelle le gaz est amené et présentant des sections transversales de passage évoluant dans la direction de l'écoulement et délimitée latéralement, dans la direction de l'écoulement, par au moins un rouleau tournant à vide (14), présentant une surface irrégulière et plongeant dans la liquide d'épuration, dont la surface délimite l'enceinte de réaction primaire (11a) dans la direction de l'écoulement.

**8.** Dispositif selon la revendication 7, caractérisé en ce que la surface du rouleau (14) présente des ouvertures de passage de gaz (38), au moyen desquelles une enceinte de réaction secondaire (11b) est formée, du côté opposé à l'enceinte de réaction primaire (11a).

**9.** Dispositif selon la revendication 8, caractérisé en ce que les ouvertures (38) sont formées par des saillies (39) en forme d'aubes dont la proéminence est tournée vers l'intérieur.

**10.** Dispositif selon la revendication 8, caractérisé en ce que les saillies (39) sont rectangulaires.

**11.** Dispositif selon l'une des revendications 8 à 10, caractérisé en ce que l'enceinte de réaction secondaire (11b) est limitée latéralement, dans la direction de l'écoulement, au moyen d'une tube de déflexion (13) stationnaire, disposé parallèlement à l'axe dans le rouleau (14).

**12.** Dispositif selon la revendication 11, caractérisé en ce que l'enceinte de réaction secondaire (11b) est en plus limitée latéralement, dans la direction de l'écoulement, au moyen d'un volet d'équilibrage de pression (37), articulé sur le tube de déflexion (13), assurant une isolation étanche, à l'état de repos, entre l'enceinte de réaction primaire et l'enceinte de réaction secondaire (11a,11b).

**13.** Dispositif selon l'une des revendications 7 à 12, caractérisé par deux rouleaux (14) tournant à vide, se faisant face, délimitant latéralement l'enceinte de réaction primaire (11a).

**14.** Dispositif selon la revendication 13, caractérisé en ce qu'un tube de déflexion (13), avec un volet d'équilibrage de pression (37) est disposé dans chaque rouleau (14).

**15.** Dispositif selon l'une des revendications 7 à 14, caractérisé par un tube de déversement (17), débouchant depuis une cuve de liquide d'épuration (15), dans un récipient collecteur de liquide d'épuration (18).

**16.** Dispositif selon la revendication 15, caractérisé par un tube de sortie (20) raccordé au récipient collecteur (18).

**17.** Dispositif selon la revendication 16, caractérisé en ce que le tube de sortie (20) mène à un récipient collecteur de boues (29).

**18.** Dispositif selon la revendication 16 ou 17, caractérisé en ce que le tube de sortie (20) mène dans le tube d'entrée de gaz (12), par l'intermédiaire d'un tube d'alimentation (19).

**19.** Dispositif selon l'une des revendications 1 à 18, caractérisé en ce que la mousse, guidée par l'intermédiaire du tube d'évacuation de mousse (16) est décomposée au moyen d'un désagrègeur de mousse (23).

**20.** Dispositif selon la revendication 19, caractérisé en ce que le liquide produit lors de la décomposition de la mousse est recyclé dans le récipient collecteur de liquide d'épuration (18), par l'intermédiaire d'un tube de retour (21).

**21.** Dispositif selon la revendication 19, caractérisé en ce que le désagrégeur de mousse (23) est entraîné par un moteur (22), entraînant simultanément une soufflante d'aspiration (24) pour le gaz non épuré.

**22.** Dispositif selon la revendication 17, caractérisé en ce que le récipient collecteur de boue (29) est disposé dans un échangeur de chaleur, auquel le gaz non épuré est amené.

Fig.1

Fig. 2

EP 0 422 337 B1

Fig. 3

Fig. 4